# EUROPÄISCHE PATENTSCHRIFT

(11) **EP 3 286 049 B1**
(45) Veröffentlichungstag und Bekanntmachung des Hinweises auf die Patenterteilung: **12.06.2019**
(21) Anmeldenummer: 16717175.0
(22) Anmeldetag: 20.04.2016
(51) Int. Cl.: B60T 13/26, B60T 8/17, B60T 13/38, B60T 13/68

(54) **PARKBREMSEINRICHTUNG FÜR KRAFTFAHRZEUGE**
PARKING BRAKE ARRANGEMENT FOR VEHICLES
ARRANGEMENT DE FREIN DE PARKING POUR VÉHICULES

(30) Priorität: 22.04.2015 DE 102015106147
(43) Veröffentlichungstag der Anmeldung: 28.02.2018
(73) Patentinhaber: KNORR-BREMSE Systeme für Nutzfahrzeuge GmbH, 80809 München (DE)
(72) Erfinder: LEINUNG, Andreas, 81245 München (DE); MICHALSKI, Max, 85579 Neubiberg (DE); USLU, Mustafa, 80997 München (DE)
(86) Internationale Anmeldenummer: PCT/EP2016/058735
(87) Internationale Veröffentlichungsnummer: WO 2016/169973

(56) Entgegenhaltungen:
- WO-A1-2014/009457
- DE-B3-102008 007 877
- DE-B3-102009 059 816

## Beschreibung

Die vorliegende Erfindung betrifft eine Parkbremseinrichtung für Kraftfahrzeuge mit wenigstens einer Steuerventileinrichtung, mit wenigstens einem Relaisventil, mit wenigstens einer pneumatischen Bremsvorrichtung und mit wenigstens einem Anhängersteuermodul, wobei mittels der Steuerventileinrichtung das Relaisventil steuerbar ist und wobei mittels des Relaisventils wenigstens die pneumatische Bremsvorrichtung ansteuerbar ist.

Parkbremsen (auch Feststellbremsen genannt) von Nutzfahrzeugen einschließlich Anhängern sowie Schienenfahrzeugen sind heute regelmäßig mit Federspeicherbremszylindern ausgestattet, die in Lösestellung einen Federkompressionsraum mit Druckluft beaufschlagen und dadurch die Feder gespannt halten, während zum Parkbremsen der Federkompressionsraum entlüftet, d. h. mit Atmosphärendruck verbunden wird, so dass der Bremszylinder unter Wirkung der Feder eine Bremskraft erzeugt (vgl. Bosch, Kraftfahrtechnisches Taschenbuch, 22. Auflage, Düsseldorf, 1995, S. 648).

Aus der DE 10 2009 059 816 B3 und aus der DE 10 2008 007 877 B3 sind bereits gattungsgemäße Parkbremseinrichtungen für Kraftfahrzeuge bekannt. Die DE 10 2008 007 877 B3 beschreibt dabei beispielsweise eine Parkbremseinrichtung, die eine sogenannte Anti-Compound-Funktion realisiert, bei der vermieden wird, dass die Parkbremse für das Zugfahrzeug und den Anhänger übermäßig beansprucht wird, wenn bei aktivierter Parkbremse gleichzeitig die Betriebsbremse wirkt.

Aus der WO 2014/009457 A1 ist eine gattungsgemäße Steuerventileinrichtung für eine Parkbremseinrichtung für Kraftfahrzeuge bekannt.

Es ist die Aufgabe der vorliegenden Erfindung, eine Parkbremseinrichtung der eingangs genannten Art in vorteilhafter Weise weiter zu bilden, insbesondere dahingehend, dass eine Parkbremseinrichtung zumindest vergleichsweise einfach aufgebaut sein kann, zusätzliche Schaltoptionen ermöglicht werden können und eine Anti-Compound-Funktion realisiert werden kann, die insbesondere die Anhängerbremse im Anti-Compound-Fall nicht beeinflusst.

Diese Aufgabe wird erfindungsgemäß gelöst durch eine Parkbremseinrichtung mit den Merkmalen des Anspruchs 1. Danach ist vorgesehen, dass eine Parkbremseinrichtung für Kraftfahrzeuge wenigstens eine Steuerventileinrichtung, wenigstens ein Relaisventil, wenigstens eine pneumatische Bremsvorrichtung und wenigstens ein Anhängersteuermodul aufweist, wobei die Steuerventileinrichtung und das Relaisventil mittels einer Verbindungsleitung miteinander verbunden sind, wobei mittels der Steuerventileinrichtung das Relaisventil steuerbar ist und wobei mittels des Relaisventils wenigstens die pneumatische Bremsvorrichtung ansteuerbar ist, wobei wenigstens eine erste Steuerleitung einer separaten Betriebsbremse mit dem Relaisventil verbunden ist, wobei weiter zwischen dem Relaisventil und dem Anhängersteuermodul ein erstes Select-Low-Ventil angeordnet ist.

Die Erfindung basiert auf dem Grundgedanken, dass durch den Einsatz eines Select-Low-Ventils während der Anti-Compound-Funktion (also wenn vermieden werden soll, dass die Parkbremse für das Zugfahrzeug übermäßig beansprucht wird, wenn bei aktivierter Parkbremse gleichzeitig die Betriebsbremse wirkt) der für die Aktivierung der Betriebsbremse anliegende Druck das Select-Low-Ventil derart schaltet, dass das Anhängersteuermodul nicht sowohl über die Steuerleitung der Betriebsbremse als auch gleichzeitig über die Leitungen der Parkbremseinrichtung mit Druckluft versorgt wird. Dadurch wird sichergestellt, dass bei Aktivierung der Betriebsbremse nur die hierfür anliegende Druckluft wirkt und nicht noch zusätzlich die an der Parkbremseinrichtung, die sich in der Parkstellung befindet, anliegende Druckluft insbesondere das Anhängersteuermodul erreicht und neben der Betriebsbremse zusätzlich das Anhängersteuermodul beeinflusst bzw. mit Druckluft beaufschlagt. Insbesondere wird somit eine ungewollte Kopplung der Steuereingänge des Anhängersteuermoduls von verschiedenen Bremskreisen vermieden.

Die Steuerleitung der separaten Betriebsbremse kann mit einem gesonderten Anschluss am Relaisventil angeschlossen sein. Grundsätzlich ist aber auch möglich, dass auch ein Relaisventil eingesetzt wird, das nur einen Steuereingang aufweist, der sowohl mit der Verbindungsleitung, die das Steuerventil mit dem Relaisventil verbindet, und mit der Steuereinleitung der separaten Betriebsbremse verbunden ist. In diesem Zusammenhang wird beispielsweise wie aus der DE 10 2008 007 877 B3 bekannt, auch ein Select-High-Ventil eingesetzt.

In weiterer Ausgestaltung der Erfindung kann vorgesehen sein, dass ein erster Eingang des ersten Select-Low-Ventils an eine Verbindungsleitung angeschlossen ist, die von einer Leitung stromabwärts des Relaisventils abzweigt. Dadurch wird erreicht, dass bei aktivierter Parkbremse an diesem Eingang des Select-Low-Ventils derselbe Druck wie nach dem Relaisventil anliegt, d.h. der für die Ansteuerung der betätigten Betriebsbremse anliegende Druck. Da dieser Druck höher ist als der am anderen Eingang des Select-Low-Ventils anliegende Druck, wird das Select-Low-Ventil automatisch derart geschaltet, dass der für die Ansteuerung der betätigten Betriebsbremse anliegende Druck das Select-Low-Ventil an dem ersten Eingang sperrt, und somit dieser Druck das Anhängersteuermodul nicht erreichen und nicht beeinflussen kann. Darüber hinaus ergibt sich der Vorteil, dass das Anhängersteuermodul mit demselben bzw. mit im Wesentlichen demselben Druck angesteuert werden kann wie die Parkbremse des Zugfahrzeugs, da die Druckversorgung jeweils stromabwärts des Relaisventils angeordnet ist.

Des Weiteren kann vorgesehen sein, dass ein zweiter Eingang des ersten Select-Low-Ventils an eine Verbindungsleitung angeschlossen ist, die mit einem Anschluss der Steuerventileinrichtung verbunden ist. Die Verbindungsleitung kann insbesondere eine Verbindungsleitung sein, die das erste Select-Low-Ventil direkt mit einem Anschluss der Steuerventileinrichtung verbindet. Dadurch wird erreicht, dass der zweite Eingang des Select-Low-Ventils während der Anti-Compound-Funktion mit dem Teil der Parkbremseinrichtung verbunden ist, der während der Aktivierung der Parkbremse drucklos geschaltet ist. Somit wird alternativ und/oder zusätzlich zuverlässig erreicht, dass der erste Eingang des Select-Low-Ventils gesperrt wird und somit der Druck zur Ansteuerung der Betriebsbremse das Anhängersteuermodul nicht erreichen und somit das Anhängersteuermodul nicht beeinflussen kann.

Während der Anti-Compound-Funktion kann der über die Leitung, die stromabwärts des Relaisventils abzweigt, anliegende Druck das erste Select-Low-Ventil derart schalten, dass der erste Eingang hierdurch versperrt wird. Dadurch wird, wie vorstehend bereits erläutert, einfach und zuverlässig eine Anti-Compound-Funktion realisiert.

Darüber hinaus kann vorgesehen sein, dass in der Verbindungsleitung, die die Steuerventileinrichtung und das Relaisventil miteinander verbindet, ein erstes Select-High-Ventil angeordnet ist. Dieses erste Select-High-Ventil eröffnet weitere Schaltmöglichkeiten der Parkbremseinrichtung, insbesondere dahingehend, dass die pneumatische Bremsvorrichtung und das Anhängersteuermodul unabhängig voneinander angesteuert und geschaltet werden können.

Es ist möglich, dass von der Verbindungsleitung, die die Steuerventileinrichtung und das Relaisventil miteinander verbindet, eine Abzweigungsleitung zum Anhängersteuermodul abzweigt.

In dieser Abzweigungsleitung kann stromaufwärts des Anhängersteuermoduls ein zweites Select-High-Ventil vorgesehen sein. Dieses zweite Select-High-Ventil ermöglicht es beispielsweise, das Anhängersteuermodul gesondert anzusteuern, z.B. im Zusammenhang mit einer Testfunktion der Bremse des Anhängers.

Insbesondere kann vorgesehen sein, dass zwischen dem ersten Select-High-Ventil und dem zweiten Select-High-Ventil das erste Select-Low-Ventil angeordnet ist. Dadurch ergibt sich eine besonders vorteilhafte Anordnung dahingehend, dass der über die erste Steuerleitung der separaten Betriebsbremse anliegende Druck zum Anhängersteuermodul gelangen kann, da dies durch das Select-Low-Ventil automatisch durch Verschließen des entsprechenden Eingangs des Select-Low-Ventils verhindert wird. Die Anordnung des Select-Low-Ventils zwischen dem ersten Select-High-Ventil und dem zweiten Select-High-Ventil ermöglicht bei der Anti-Compound-Funktion der Parkbremseinrichtung eine Schaltung der Ventile, die allein durch das Betätigen der Betriebsbremse das Select-Low-Ventil derart schaltet, dass das Anhängersteuermodul ausschließlich über die zugehörige Steuerleitung der Betriebsbremse angesprochen wird. Darüber hinaus kann vorgesehen sein, dass ein zweites Select-Low-Ventil vorgesehen ist, wobei das zweite Select-High-Ventil einen weiteren Eingang aufweist, der mittels einer Verbindungsleitung mit einem Ausgang des zweiten Select-Low-Ventils verbunden ist. Dadurch wird eine weitere Schaltoption für die Parkbremsvorrichtung ermöglicht. Insbesondere dient das zweite Select-Low-Ventil dazu, eine Möglichkeit zu schaffen, die Parkbremseinrichtung mit anderen Komponenten des Kraftfahrzeugs (z.B. einem Luftaufbereitungssystem) zu verbinden, aber insbesondere auch um die Parkbremseinrichtung gegenüber den anderen Komponenten absperren zu können. Allerdings kann über diese Ventilanordnung auch eine von der normalen Druckluftversorgung der Parkbremseinrichtung unabhängige Ansteuerung des Anhängersteuermoduls realisiert werden. So ist denkbar, hierüber eine Trailer-Test-Funktion zu realisieren.

In weiterer Ausgestaltung der Erfindung kann vorgesehen sein, dass ein erster Eingang des zweiten Select-Low-Ventils mittels einer Zuleitung mit einer die Parkbremseinrichtung mit Druckluft versorgenden Druckluftquelle verbindbar ist. Dadurch ergibt sich beispielsweise die Möglichkeit, über diese Zuleitung das Select-Low-Ventil derart zu schalten, dass es den ersten Eingang sperrt. Ein solcher Schaltzustand ist insbesondere im Zusammenhang mit der Realisierung der Anti-Compound-Funktion und/oder der Trailer-Test-Funktion zweckmäßig. Denn durch das Sperren des ersten Eingangs des zweiten Select-Low-Ventils werden die Zuleitungen zum zweiten Select-High-Ventil und damit auch zum Anhängersteuermodul von der die Parkbremseinrichtung mit Druckluft versorgenden Druckluftquelle sicher getrennt.

Ein zweiter Eingang des zweiten Select-Low-Ventils kann mittels einer Zuleitung mit einer von einem Luftaufbereitungssystem kommenden Zuleitung verbindbar sein. Dadurch wird es möglich, die im Luftaufbereitungssystem ohnehin vorhandene Druckluft für die Ansteuerung z.B. des Anhängersteuermoduls zu nutzen. Insbesondere ist hier denkbar, diese zusätzliche Ansteuerungsmöglichkeit im Zusammenhang mit der Trailer-Test-Funktion und/oder der Anti-Compound-Funktion (z.B. durch Entlüftung über das Luftaufbereitungssystem) zu nutzen.

Des Weiteren kann vorgesehen sein, dass die von dem Luftaufbereitungssystem kommende Zuleitung an einen Ausgang eines Magnetventils des Luftaufbereitungssystems angeschlossen ist. Dieses Magnetventil kann beispielsweise ein 3/2-Wegeventil mit Abluftfunktion und/oder Drosselfunktion sein.

In weiterer Ausgestaltung der Erfindung kann vorgesehen sein, dass während der Anti-Compound-Funktion der in der mit dem ersten Eingang des zweiten Select-Low-Ventils verbundenen Zuleitung anliegende Druck das zweite Select-Low-Ventil derart schaltet, dass der erste Eingang versperrt wird. Dieser Druck ist beispielsweise der von der Druckluftquelle kommende Druck, die die Parkbremseinrichtung mit Druckluft versorgt. Somit wird durch die reguläre Schaltung der Parkbremseinrichtung während der Parkstellung automatisch erreicht, dass eine der Zuleitungen zum Anhängersteuermodul gesperrt wird und die von der Druckluftquelle kommende Druckluft das Anhängersteuermodul nicht erreichen kann.

Des Weiteren ist es möglich, dass während der Anti-Compound-Funktion die vom Luftaufbereitungssystem kommende Zuleitung über das Magnetventil des Luftaufbereitungssystems entlüftet wird. Dadurch wird sichergestellt, dass der zweite Eingang des Select-Low-Ventils drucklos bzw. bei Atmosphärendruck liegt. Folglich wird das Select-Low-Ventil von der die Parkbremseinrichtung versorgenden und am ersten Eingang des Select-Low-Ventils anliegenden Druckluft gesperrt.

Außerdem kann vorgesehen sein, dass wenigstens eine zweite Steuerleitung der separaten Betriebsbremse mit dem Anhängersteuermodul verbunden ist. Dadurch kann das Anhängersteuermodul direkt von der Betriebsbremse angesprochen werden. Außerdem kann dadurch erreicht werden, dass das Anhängersteuermodul unabhängig von der Betätigung der anderen Bremseinrichtungen des Kraftfahrzeugs betätigt werden kann.

Weitere Einzelheiten und Vorteile der vorliegenden Erfindung sollen nun anhand von in den Zeichnungen dargestellten Ausführungsbeispielen näher erläutert werden.

Dabei zeigt die einzige Figur eine schematische Darstellung eines Ausführungsbeispiels für eine erfindungsgemäße Parkbremseinrichtung während der Anti-Compound-Funktion.

Die einzige Figur zeigt eine schematische Darstellung eines Ausführungsbeispiels einer erfindungsgemäßen Parkbremseinrichtung 1 für Kraftfahrzeuge.

Die Parkbremseinrichtung 1 weist ein Rückschlagventil 10 auf, mittels dessen die Parkbremseinrichtung 1 an einer nicht näher dargestellten Druckluftversorgung angeschlossen ist.

Stromabwärts des Rückschlagventils 10 können eine Filtereinheit 12 und eine Drossel 14 vorgesehen sein.

Die Parkbremseinrichtung 1 hat weiter ein erstes elektrisch steuerbares Magnetventil 16 und ein zweites elektrisch steuerbares Magnetventil 18, an deren Ausgängen als Steuerventileinrichtung 20 ein pneumatisch steuerbares Steuerventil 20 angeschlossen ist.

Die beiden Magnetventile 16 und 18 sind über das Rückschlagventil 10 mit der nicht dargestellten Druckluftquelle des Fahrzeugs verbunden, über die Druckluft zuführbar ist.

Beide Magnetventile 16 und 18 werden jeweils durch eine Feder 17 bzw. 19 in eine Ruhelage gebracht.

Das Magnetventil 16 ist als sogenanntes 2/2-Wegeventil ausgebildet. Durch die Feder 17 ist das Magnetventil 16 monostabil und zwar stabil in der Ruhelage.

Grundsätzlich ist aber auch denkbar, dass das Magnetventil 16 als 3/2-Wegeventil ausgebildet ist. Eine derartige Konfiguration ist beispielsweise in der DE 10 2008 007 877 B3 gezeigt.

Das Magnetventil 18 ist ein sogenanntes 3/2-Wegeventil. Es ist zugleich als Steuer- und Entlüftungsventileinrichtung mit integrierter Drossel ausgebildet. Durch die Feder 19 ist das Magnetventil 18 monostabil und zwar stabil in der Ruhelage.

Denkbar ist auch, dass das Magnetventil 18 als einfaches monostabiles 2/2-Wegeventil ausgebildet sein kann (dann ohne Entlüftungsfunktion).

Ebenso wird das pneumatisch steuerbare Steuerventil 20 durch wenigstens eine Feder 21 in eine Ruhelage gebracht.

Das Steuerventil 20 ist als ein 3/2-Wegeventil ausgeführt. Es ist jedoch durch die Art seiner Verschaltung bistabil ausgelegt.

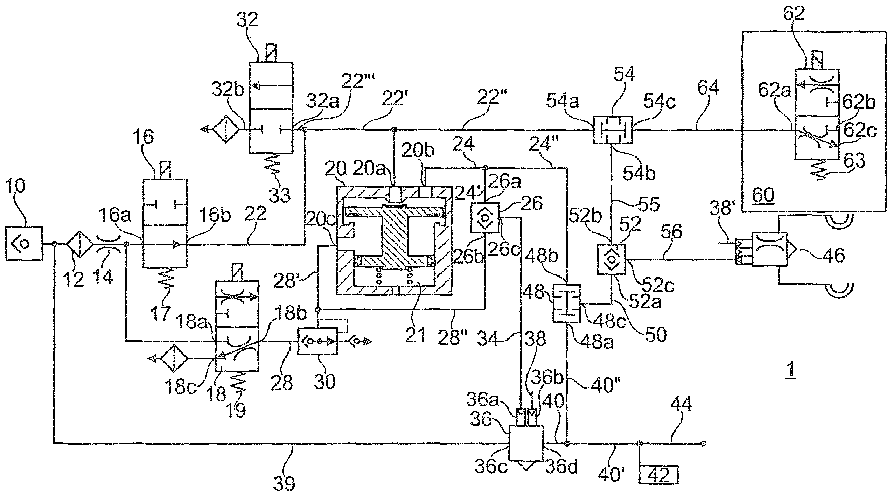

In Figur 1 sind jeweils die Ruhelagen dargestellt, bei denen die entsprechenden Ventile 16, 18 bzw. 20 deaktiviert sind.

Die Parkbremseinrichtung 1 befindet sich dabei im Parkmodus und zugleich in der sogenannten Anti-Compound-Funktion, d.h. dass gleichzeitig die nicht näher dargestellte Betriebsbremse wirkt.

Das erste Magnetventil 16 hat einen Eingang 16a und einen Ausgang 16b.

In ähnlicher Weise hat das zweite Magnetventil 18 einen Eingang 18a, einen Ausgang 18b und einen Entlüftungsausgang 18c.

In der dargestellten Ruhelage verbindet das Magnetventil 16 den Eingang 16a mit dem Ausgang 16b.

Das zweite Magnetventil 18 sperrt in der dargestellten Ruhestellung den Eingang 18a ab und verbindet den Ausgang 18b mit dem Entlüftungsausgang 18c. In der aktivierten Position verbindet das zweite Magnetventil 18 dagegen den Eingang 18a mit dem Ausgang 18b, während der Entlüftungsausgang 18c abgesperrt ist.

Das pneumatisch gesteuerte Steuerventil 20 hat ebenfalls drei Anschlüsse und zwar einen Eingang 20a, einen Ausgang 20b und einen weiteren Anschluss 20c. Der Eingang 20a ist über eine Verbindungsleitung 22, 22' mit dem Ausgang 16b des ersten Magnetventils 16 verbunden. Der Ausgang 20b ist über eine Verbindungsleitung 24, 24' mit einem Eingang 26a eines Select-High-Ventils 26 verbunden, während der Anschluss 20c über eine Verbindungsleitung 28, 28' mit dem Ausgang 18b des zweiten Magnetventils 18 verbunden ist.

Das pneumatisch steuerbare Steuerventil 20 sperrt in der Ruhestellung den Eingang 20a ab und verbindet den Ausgang 20b mit dem Anschluss 20c. In der aktivierten Stellung des Steuerventils 20 ist dagegen der Eingang 20a mit dem Ausgang 20b verbunden und der Anschluss 20c ist abgesperrt.

Das pneumatisch steuerbare Steuerventil 20 kann ein normales Pneumatikventil sein. Es kann auch ein pneumatisch steuerbares Servo-Ventil sein. Schließlich kann das Steuerventil 20 auch elektrisch steuerbar sein, d. h. es kann ein bistabiles elektrisch steuerbares Magnetventil sein.

Von der Leitung 28 zweigt eine weitere Leitung 28" ab, die mit dem Eingang 26b des Select-High-Ventils 26 verbunden ist.

In der Leitung 28 ist ferner ein Schnellentlüftungsventil 30 vorgesehen, das ein ESS-Ventil sein kann.

Die Verbindungsleitung 22''', die von der Leitung 22 abzweigt, führt zu einem Entlüftungsventil 32, das ein 2/2-Wegeventil (Magnetventil) ist, und ist mit dessen Eingang 32a verbunden. Das Entlüftungsventil 32 weist weiter einen Entlüftungsausgang 32b auf. In der dargestellten Stellung ist der Entlüftungsausgang 32b gesperrt. Das Entlüftungsventil 32 wird über die Feder 33 in eine Ruhelage gebracht. Durch die Feder 33 ist das Magnetventil 32 monostabil und zwar stabil in der Ruhelage.

Vom Ausgang 26c des Select-High-Ventils 26 verbindet eine Leitung 34 das Select-High-Ventil 26 mit einem Steuereingang 36a eines Relaisventils 36.

Ein weiterer Steuereingang 36b des Relaisventils 36 ist mit einer pneumatischen Leitung 38 verbunden, die eine pneumatische Steuerleitung vom Bremspedal des Fahrzeugs ist und die mit Druck der Betriebsbremse des Fahrzeugs beaufschlagt ist.

Der Anschluss 36c des Relaisventils 36 ist über eine Verbindungsleitung 39 mit dem Rückschlagventil 10 verbunden und hierüber an die Druckluftversorgung angeschlossen.

Der Ausgang 36d des Relaisventils 36 ist über eine Zuleitung 40, 40' mit einer pneumatischen Bremsvorrichtung 42 für das Kraftfahrzeug bzw. Zugfahrzeug und mit einer weiteren Leitung 44 verbunden.

Die pneumatische Bremsvorrichtung 42 des Kraftfahrzeugs bzw. Zugfahrzeugs kann eine Druckkammer eines Federspeicher-Bremszylinders (nicht näher dargestellt) aufweisen. Die Federspeicherbremse ist dann gelöst, wenn die genannte Druckkammer des Federspeicher-Bremszylinders mit Druckluft beaufschlagt ist. Umgekehrt ist die Parkbremse durch die Feder des Federspeicher-Bremszylinders aktiviert, wenn die genannte Druckkammer entlüftet ist.

Stromabwärts des Relaisventils 36 ist neben der pneumatischen Bremsvorrichtung 42 für das Kraftfahrzeug bzw. Zugfahrzeug auch ein Anhängersteuermodul 46 angeordnet.

Das Anhängersteuermodul 46 ist dabei wie folgt angeschlossen:
Von der Leitung 40 zweigt stromabwärts des Relaisventils 36 eine Leitung 40" ab, die mit einem Eingang 48a eines Select-Low-Ventils 48 verbunden ist. Ein zweiter Eingang 48b des Select-Low-Ventils 48 ist über die Leitung 24, 24" mit dem Eingang 20b des Steuerventils 20 verbunden.

Ein Ausgang 48c des Select-Low-Ventils 48 ist über eine Leitung 50 mit einem Eingang 52a eines Select-High-Ventils 52 verbunden.

Ein weiterer Eingang 52b des Select-High-Ventils 52 ist mit einer Leitung 22", 55 verbunden, in der ein weiteres Select-Low-Ventil 54 angeordnet ist.

Dabei ist der Ausgang 54b des Select-Low-Ventils 54 mit der Leitung 55 verbunden.

Ein erster Eingang 54a des Select-Low-Ventils 54 ist mittels der Zuleitung 22" mit der die Parkbremseinrichtung 1 über das Rückschlagventil 10 mit Druckluft versorgenden Druckluftquelle verbindbar.

Ein zweiter Eingang 54c des zweiten Select-Low-Ventils 54 ist mittels einer Zuleitung 64 mit einem Luftaufbereitungssystem 60 verbindbar.

Die von dem Luftaufbereitungssystem 60 kommende Zuleitung 64 ist an einen Ausgang 62a eines Magnetventils 62 des Luftaufbereitungssystems 60 angeschlossen.

Das Magnetventil 62 ist wie das Magnetventil 18 ein sogenanntes 3/2-Wegeventil. Es ist zugleich als Steuer- und Entlüftungsventileinrichtung mit integrierter Drossel ausgebildet. Durch die Feder 63 ist das Magnetventil 62 monostabil.

Das Magnetventil 62 weist einen Eingang 62a (bzw. Ausgang 62a), einen Ausgang 62b und einen Entlüftungsausgang 62c auf.

Das Anhängersteuermodul 46 ist wiederum über eine Leitung 56 am Anschluss 52c des Select-High-Ventils 52 angeschlossen.

Ein Steuereingang des Anhängersteuermoduls 46 ist mit einer pneumatischen Leitung 38' verbunden, die ebenfalls eine pneumatische Steuerleitung vom Bremspedal des Fahrzeugs ist und die mit Druck der Betriebsbremse des Fahrzeugs beaufschlagt ist.

Somit ist die Parkbremseinrichtung 1 derart beschaffen, dass in der Verbindungsleitung 24, 34, die die Steuerventileinrichtung 20 und das Relaisventil 36 miteinander verbindet, ein erstes Select-High-Ventil 26 angeordnet ist, wobei in dieser Verbindungsleitung 24, 34 zwischen Steuerventileinrichtung 20 und dem ersten Select-High-Ventil 26 eine Abzweigungsleitung 24", 50, 56 zum Anhängersteuermodul 46 vorgesehen ist, wobei in dieser Abzweigungsleitung 24", 50, 56 stromaufwärts des Anhängersteuermoduls 46 ein zweites Select-High-Ventil 52 vorgesehen ist und wobei zwischen dem ersten Select-High-Ventil 26 und dem zweiten Select-High-Ventil 52 ein erstes Select-Low-Ventil 48 angeordnet ist.

In der Abzweigungsleitung 24" ist zwischen dem ersten Select-High-Ventil 26 und dem zweiten Select-High-Ventil 52 das Select-Low-Ventil 48 angeordnet.

Der Eingang 48a des Select-Low-Ventils 48 ist mit der Versorgungsleitung 40" verbunden, die stromabwärts des Relaisventils 36 angeordnet ist.

Der Eingang 52b des zweiten Select-High-Ventils 52 ist mit der Zuleitung 22" verbunden, in der das Abluftventil 54 angeordnet ist, mittels dessen die über die Zuleitung 22" zugeführte Druckluft einstellbar ist.

Im Folgenden wird die Wirkungsweise der Parkbremseinrichtung 1 erläutert.

Die Einrichtung hat zwei sichere, stabile Zustände, nämlich den normalen Fahrzustand und den Zustand der aktivierten Parkbremse (wie in Figur 1 gezeigt). Bei Ausfall der elektrischen Versorgung wird der unmittelbar dem Ausfall vorhergehende Zustand stabil beibehalten.

Die Sicherheitsfunktion wird durch das bistabile Steuerventil 20 realisiert. Dieses Steuerventil 20 wird in der in Figur 1 dargestellten Parkstellung durch die Feder 21 gehalten. Die Anschlüsse 20b und 20c des Steuerventils 20 sind verbunden und über das Schnellentlüftungsventil 30 und das zweite Magnetventil 18 über den Eingang 18b zu dessen Entlüftungsausgang 18c hin entlüftet.

Das Steuerventil 20 ist deaktiviert und durch die Feder 21 in die dargestellte Stellung gebracht. Dies ist einer der zwei stabilen Zustände des Steuerventils 20.

In der Parkposition ist auf der Leitung 38 normalerweise kein Druck (Betriebsbremse deaktiviert), so dass an die pneumatischen Steuereingänge 36a und 36b des Relaisventils 36 Atmosphärendruck gelangt. Dieses ist damit entlüftet, so dass auch die Federkammer des Federspeicher-Bremszylinders der pneumatischen Bremsvorrichtung 42 entlüftet ist und damit die Parkbremse angelegt bzw. aktiviert ist.

Bei deaktivierter Parkbremse, d. h. im Fahrzustand, ist das Steuerventil 20 durchgeschaltet, d. h. aktiviert. Der Eingang 20a ist dann mit dem Ausgang 20b verbunden.

Über das aktivierte Steuerventil 20 gelangt Druck von der Druckmittelquelle über das Rückschlagventil 10 auch zum Steuereingang 36a des Relaisventils 36, welches durchschaltet und damit die Federkammer des Federspeicher-Bremszylinders der Betriebsbremse des Kraftfahrzeugs bzw. Zugfahrzeugs über die Leitung 40, 40' mit Druck beaufschlagt und damit die Betriebsbremse löst. Somit ist die Sicherheitsfunktion realisiert, d. h. beide beschriebenen Betriebszustände sind jeweils für sich stabil, unabhängig von dem Zustand der Stromversorgung der Magnetventile 16 und 18.

### Umschalten von Parkbremse auf Fahrzustand

Durch Betätigen des zweiten Magnetventils 18 wird dessen Eingang 18a mit dem Ausgang 18b verbunden. Damit gelangt Druckluft aus der Druckmittelquelle über das Rückschlagventil 10 zum Anschluss 20c des Steuerventils 20, von dessen Ausgang 20b zur Leitung 24. Gleichzeitig liegt aber bereits hoher Druck am Select-High-Ventil 26 an, der über die Leitung 28" zugeführt wird.

Da auch das Magnetventil 16 durchgeschaltet ist und am Eingang 20a Druck anliegt, schaltet das Steuerventil 20 durch und der Eingang 20a wird mit dem Ausgang 20b verbunden.

Das Ventil 18 kann dann wieder in die Ruheposition zurückkehren bzw. es ist unerheblich für den Fahrzustand, welche Position das Ventil 18 einnimmt.

Über das Select-High-Ventil 26 gelangt der vom Ausgang 20b kommende Druck an den Steuereingang 36a des Relaisventils 36, das durchschaltet und somit den Druck von seinem Eingang 36c zur Federkammer des Federspeicher-Bremszylinders über die Leitung 40, 40' gelangen lässt, so dass die Betriebsbremse des Kraftfahrzeugs bzw. Zugfahrzeugs gelöst wird. Das Steuerventil 20 ist dann in der zweiten, durch Druck gehaltenen stabilen Position.

### Umschalten vom Fahrzustand zur Parkbremse

Das Umschalten vom Fahrzustand zur Parkbremse erfolgt durch das erste Magnetventil 16 und durch das zweite Magnetventil 18, das Schnellentlüftungsventil 30 sowie über das Entlüftungsventil 32. Wird das erste Magnetventil 16 aktiviert, so werden sein Eingang 16a und sein Ausgang 16b abgesperrt. Außerdem wird das zweite Magnetventil 18 derart geschaltet, dass der Eingang 18a gesperrt und die Ausgänge 18b und 18c miteinander verbunden sind. Somit kann Druck über das Schnellentlüftungsventil 30 und den Entlüftungsausgang 18c des Magnetventils 18 entweichen. Da auch das Entlüftungsventil 32 derart geschaltet wird, dass der Eingang 32a und der Ausgang 32b miteinander verbunden sind, so dass über den Entlüftungsausgang 32b entlüftet werden kann, sinkt der Druck in den zum Steuerventil 20 führenden Leitungen ab.

Sobald dieser Druck einen vorgegebenen Schwellwert erreicht hat, der unter anderem durch die Kraft der Feder 21 einstellbar ist, schaltet das Steuerventil 20 in die in Figur 1 gezeigte Ruhestellung zurück.

### Anti-Compound-Funktion

Bei der Anti-Compound-Funktion befindet sich die Parkbremseinrichtung 1 wie in der Figur gezeigt beispielsweise in der Parkposition und über die pneumatischen Steuerleitungen 38 und 38' wird die Druckluft der Betriebsbremse zugeführt.

Bei aktivierter Parkbremse liegt am Eingang 48a des Select-Low-Ventils 48 derselbe Druck wie nach dem Relaisventil 36 an, d.h. der für die Ansteuerung der betätigten Betriebsbremse anliegende Druck. Da dieser Druck höher ist als der am anderen Eingang des Select-Low-Ventils 48 anliegende Druck, wird das Select-Low-Ventil 48 automatisch derart geschaltet, dass der für die Ansteuerung der betätigten Betriebsbremse anliegende Druck das Select-Low-Ventil 48 an seinem ersten Eingang 48a sperrt, und somit dieser Druck das Anhängersteuermodul 46 nicht erreichen kann.

Der zweite Eingang 48b des Select-Low-Ventils 48 ist während der Anti-Compound-Funktion mit dem Teil der Parkbremseinrichtung 1 verbunden, der während der Aktivierung der Parkbremse drucklos geschaltet ist. Somit wird zuverlässig erreicht, dass der erste Eingang 48a des Select-Low-Ventils 48 gesperrt wird.

Durch den Einsatz des Select-Low-Ventils 48 während der Anti-Compound-Funktion (also wenn vermieden werden soll, dass die Parkbremse für das Zugfahrzeug und den Anhänger übermäßig beansprucht wird, wenn bei aktivierter Parkbremse gleichzeitig die Betriebsbremse wirkt) wird erreicht, dass der für die Aktivierung der Betriebsbremse anliegende Druck das Select-Low-Ventil 48 derart schaltet, dass das Anhängersteuermodul 46 nicht sowohl über die Steuerleitung 38' der Betriebsbremse als auch gleichzeitig über die Leitungen 40, 40" mit Druckluft versorgt wird. Dadurch wird sichergestellt, dass bei Aktivierung der Betriebsbremse nur die hierfür anliegende Druckluft wirkt und nicht noch die zusätzlich anliegende Druckluft das Anhängersteuermodul erreicht und dieses beeinflusst.

Durch das zweite Select-Low-Ventil 54 wird eine weitere Schaltoption für die Parkbremsvorrichtung 1 ermöglicht. Insbesondere wird es aber über das zweite Select-Low-Ventil 54 möglich, die Parkbremseinrichtung 1 gegenüber dem Luftaufbereitungssystem 60 und dem Magnetventil 62 absperren zu können.

### Trailer-Test-Funktion

Während der Trailer-Test-Funktion können der in der mit dem ersten Eingang 54a des zweiten Select-Low-Ventils 54 verbundenen Zuleitung 22" anliegende Druck und der über die Zuleitung 64 anliegende Druck das zweite Select-Low-Ventil 54 derart schalten, dass der erste Eingang 54a geöffnet wird.

Das Anhängersteuermodul 46 kann so unabhängig von der Parkbremse des Zugfahrzeugs angesteuert werden.

## Patentansprüche

1. Parkbremseinrichtung (1) für Kraftfahrzeuge mit wenigstens einer Steuerventileinrichtung (20), mit wenigstens einem Relaisventil (36), mit wenigstens einer pneumatischen Bremsvorrichtung (42) und mit wenigstens einem Anhängersteuermodul (46), wobei die Steuerventileinrichtung (20) und das Relaisventil (36) mittels einer Verbindungsleitung (24, 34) miteinander verbunden sind, wobei mittels der Steuerventileinrichtung (20) das Relaisventil (36) steuerbar ist und wobei mittels des Relaisventils (36) wenigstens die pneumatische Bremsvorrichtung (42) ansteuerbar ist, wobei wenigstens eine erste Steuerleitung (38) einer separaten Betriebsbremse mit dem Relaisventil (36) verbunden ist, **dadurch gekennzeichnet, dass** zwischen dem Relaisventil (36) und dem Anhängersteuermodul (46) ein erstes Select-Low-Ventil (48) angeordnet ist.

2. Parkbremseinrichtung (1) nach Anspruch 1, **dadurch gekennzeichnet, dass** ein erster Eingang (48a) des ersten Select-Low-Ventils (48) an eine Verbindungsleitung (40") angeschlossen ist, die von einer Leitung (40) stromabwärts des Relaisventils (36) abzweigt.

3. Parkbremseinrichtung (1) nach Anspruch 1 oder Anspruch 2, **dadurch gekennzeichnet, dass** ein zweiter Eingang (48b) des ersten Select-Low-Ventils (48) an eine Verbindungsleitung (24, 24") angeschlossen ist, die mit einem Anschluss (20b) der Steuerventileinrichtung (20) verbunden ist.

4. Parkbremseinrichtung (1) nach Anspruch 2 und Anspruch 3, **dadurch gekennzeichnet, dass** sie so ausgelegt ist, dass während der Anti-Compound-Funktion der über die Leitung (40), die stromabwärts des Relaisventils (36) abzweigt, anliegende Druck das erste Select-Low-Ventil (48) derart schaltet, dass der erste Eingang (48a) hierdurch versperrt wird.

5. Parkbremseinrichtung (1) nach einem der vorhergehenden Ansprüche, **dadurch gekennzeichnet, dass** in der Verbindungsleitung (24, 34), die die Steuerventileinrichtung (20) und das Relaisventil (36) miteinander verbindet, ein erstes Select-High-Ventil (26) angeordnet ist.

6. Parkbremseinrichtung (1) nach einem der vorhergehenden Ansprüche, **dadurch gekennzeichnet, dass** von der Verbindungsleitung (24, 34), die die Steuerventileinrichtung (20) und das Relaisventil (36) miteinander verbindet, eine Abzweigungsleitung (24", 50, 56) zum Anhängersteuermodul (46) abzweigt.

7. Parkbremseinrichtung (1) nach Anspruch 6, **dadurch gekennzeichnet, dass** in dieser Abzweigungsleitung (24", 50, 56) stromaufwärts des Anhängersteuermoduls (46) ein zweites Select-High-Ventil (52) vorgesehen ist.

8. Parkbremseinrichtung (1) nach Anspruch 7, **dadurch gekennzeichnet, dass** zwischen dem ersten Select-High-Ventil (26) und dem zweiten Select-High-Ventil (52) das erste Select-Low-Ventil (48) angeordnet ist.

9. Parkbremseinrichtung (1) nach Anspruch 7 oder Anspruch 8, **dadurch gekennzeichnet, dass** ein zweites Select-Low-Ventil (54) vorgesehen ist, wobei das zweite Select-High-Ventil (52) einen weiteren Eingang (52b) aufweist, der mittels einer Verbindungsleitung (55) mit einem Ausgang (54b) des zweiten Select-Low-Ventils (54) verbunden ist.

10. Parkbremseinrichtung (1) nach Anspruch 9, **dadurch gekennzeichnet, dass** ein erster Eingang (54a) des zweiten Select-Low-Ventils (54) mittels einer Zuleitung (22") mit einer die Parkbremseinrichtung (1) mit Druckluft versorgenden Druckluftquelle verbindbar ist.

11. Parkbremseinrichtung (1) nach Anspruch 9 oder Anspruch 10, **dadurch gekennzeichnet, dass** ein zweiter Eingang (54c) des zweiten Select-Low-Ventils (54) mittels einer Zuleitung (64) mit einem Luftaufbereitungssystem (60) verbindbar ist.

12. Parkbremseinrichtung (1) nach Anspruch 11, **dadurch gekennzeichnet, dass** die von dem Luftaufbereitungssystem (60) kommende Zuleitung (64) an einen Ausgang (62a) eines Magnetventils (62) des Luftaufbereitungssystems (60) angeschlossen ist.

13. Parkbremseinrichtung (1) nach Anspruch 12, **dadurch gekennzeichnet, dass** sie so ausgelegt ist, dass während der Trailer-Test-Funktion der in der mit dem ersten Eingang (54a) des zweiten Select-Low-Ventils (54) verbundenen Zuleitung (22") anliegende Druck und der über die vom Luftaufbereitungssystem kommende Zuleitung (64) anliegende Druck das zweite Select-Low-Ventil (54) derart schalten, dass der erste Eingang (54a) geöffnet wird.

14. Parkbremseinrichtung (1) nach einem der vorhergehenden Ansprüche, **dadurch gekennzeichnet, dass** wenigstens eine zweite Steuerleitung (38') der separaten Betriebsbremse mit dem Anhängersteuermodul verbunden ist.

## Claims

1. A parking brake arrangement (1) for motor vehicles, having at least one control valve device (20), at least one relay valve (36), at least one pneumatic brake device (42) and at least one trailer control module (46), the control valve device (20) and the relay valve (36) being connected to one another by means of a connecting line (24, 34), the relay valve (36) being controllable by means of the control valve device (20) and at least the pneumatic brake device (42) being actuatable by means of the relay valve (36), at least one first control line (38) of a separate service brake being connected to the relay valve (36), **characterised in that** a first select-low valve (48) is arranged between the relay valve (36) and the trailer control module (46).

2. A parking brake arrangement (1) according to claim 1, **characterised in that** a first inlet (48a) of the first select-low valve (48) is connected to a connecting line (40") that branches off a line (40) downstream of the relay valve (36).

3. A parking brake arrangement (1) according to claim 1 or claim 2, **characterised in that** a second inlet (48b) of the first select-low valve (48) is connected to a connecting line (24, 24") that is connected to a port (20b) of the control valve device (20).

4. A parking brake arrangement (1) according to claim 2 and claim 3, **characterised in that** it is designed such that during anti-compound operation the pressure prevailing via the line (40), which branches off downstream of the relay valve (36), switches the first select-low valve (48) so as to shut off the first inlet (48a).

5. A parking brake arrangement (1) according to any of the preceding claims, **characterised in that** a first select-high valve (26) is arranged in the connecting line (24, 34) that connects the control valve device (20) and the relay valve (36) to one another.

6. A parking brake arrangement (1) according to any of the preceding claims, **characterised in that** a branch line (24", 50, 56) branches off the connecting line (24, 34), which connects the control valve device (20) and the relay valve (36) to one another, to the trailer control module (46).

7. A parking brake arrangement (1) according to claim 6, **characterised in that** a second select-high valve (52) is provided upstream of the trailer control module (46) in the branch line (24", 50, 56).

8. A parking brake arrangement (1) according to claim 7, **characterised in that** the first select-low valve (48) is arranged between the first select-high valve (26) and the second select-high valve (52).

9. A parking brake arrangement (1) according to claim 7 or claim 8, **characterised in that** a second select-low valve (54) is provided, the second select-high valve (52) having a further inlet (52b) that is connected by means of a connecting line (55) to an outlet (54b) of the second select-low valve (54).

10. A parking brake arrangement (1) according to claim 9, **characterised in that** a first inlet (54a) of the second select-low valve (54) is connectable by means of a feed line (22") to a compressed-air source that supplies compressed air to the parking brake arrangement (1).

11. A parking brake arrangement (1) according to claim 9 or claim 10, **characterised in that** a second inlet (54c) of the second select-low valve (54) is connectable by means of a feed line (64) to an air treatment system (60).

12. A parking brake arrangement (1) according to claim 11, **characterised in that** the feed line (64) coming from the air treatment system (60) is connected to an outlet (62a) of a solenoid valve (62) of the air treatment system (60).

13. A parking brake arrangement (1) according to claim 12, **characterised in that** it is designed such that during trailer test operation the pressure prevailing in the feed line (22") connected to the first inlet (54a) of the second select-low valve (54) and the pressure prevailing via the feed line (64) coming from the air treatment system switch the second select-low valve (54) so as to open the first inlet (54a).

14. A parking brake arrangement (1) according to any of the preceding claims, **characterised in that** at least one second control line (38') of the separate service brake is connected to the trailer control module.

## Revendications

1. Dispositif (1) de frein de stationnement de véhicules automobiles, comprenant au moins un dispositif (20) de vanne de commande, comprenant au moins une vanne (36) relais, comprenant au moins un système (42) pneumatique de frein et comprenant au moins un module (46) de commande de remorque, le dispositif (20) de vanne de commande et la vanne (36) relais étant reliés entre eux au moyen d'une ligne (24, 34) de liaison, dans lequel la vanne (36) relais peut être commandée au moyen du dispositif (20) de vanne de commande et dans lequel au moins le système (42) pneumatique de frein peut être commandé au moyen de la vanne (36) relais, dans lequel au moins une première ligne (38) de commande d'un frein de service distinct est reliée à la vanne (36) relais, **caractérisé en ce qu'**une première vanne (48) select-low est montée entre la vanne (36) relais et le module (46) de remorque.

2. Dispositif (1) de frein de stationnement suivant la revendication 1, **caractérisé en ce qu'**une première entrée (48a) de la première vanne (48) select-low est raccordée à une ligne (40") de liaison, qui bifurque d'une ligne (40) en aval de la vanne (36) relais.

3. Dispositif (1) de frein de stationnement suivant la revendication 1, ou 2, **caractérisé en ce qu'**une deuxième entrée (48b) de la première vanne (48) select-low est raccordée à une ligne (24, 24") de liaison, qui est reliée à un raccord (20b) du dispositif (20) de vanne de commande.

4. Dispositif (1) de frein de stationnement suivant la revendication 2 et la revendication 3, **caractérisé en ce qu'**il est conçu de manière à ce que, pendant la fonction anti-compound de la pression s'appliquant par l'intermédiaire de la ligne (40) qui bifurque en aval de la vanne (36) relais, la première vanne (48) select-low soit commutée de manière à ce que la première entrée (48a) soit ainsi fermée.

5. Dispositif (1) de frein de stationnement suivant l'une des revendications précédentes, **caractérisé en ce qu'**une première vanne (26) select-high est montée dans la ligne (24, 34) de liaison, qui relie entre eux le dispositif (20) de vanne de commande et la vanne (36) relais.

6. Dispositif (1) de frein de stationnement suivant l'une des revendications précédentes, **caractérisé en ce que**, de la ligne (24, 34) de liaison, qui relie entre eux le dispositif (20) de vanne de commande et la vanne (36) relais, une ligne (24", 50, 56) de bifurcation bifurque vers le module (46) de commande de remorque.

7. Dispositif (1) de frein de stationnement suivant la revendication 6, **caractérisé en ce qu'**une deuxième vanne (52) select-high est prévue dans cette ligne (24", 50, 56) de bifurcation en amont du module (46) de commande de remorque.

8. Dispositif (1) de frein de stationnement suivant la revendication 7, **caractérisé en ce que** la première vanne (48) select-low est montée entre la première vanne (26) select-high et la deuxième vanne (52) select-high.

9. Dispositif (1) de frein de stationnement suivant la revendication 7 ou la revendication 8, **caractérisé en ce qu'**il est prévu une deuxième vanne (54) select-low, la deuxième vanne (52) select-high ayant une autre entrée (52b), qui est reliée, au moyen d'une ligne (55) de liaison, à une sortie (54b) de la deuxième vanne (54) select-low.

10. Dispositif (1) de frein de stationnement suivant la revendication 9, **caractérisé en ce qu'**une première entrée (54a) de la deuxième vanne (54) select-low peut, au moyen d'un conduit (22") d'arrivée, être reliée à une source d'air comprimé alimentant le dispositif (1) de frein de stationnement en air comprimé.

11. Dispositif (1) de frein de stationnement suivant la revendication 9 ou la revendication 10, **caractérisé en ce qu'**une deuxième entrée (54c) de la deuxième vanne (54) select-low peut, au moyen d'un conduit (64) d'arrivée, être reliée à un système (60) de préparation d'air.

12. Dispositif (1) de frein de stationnement suivant la revendication 11, **caractérisé en ce que** le conduit (64) d'arrivée, arrivant du système (60) de préparation d'air, est raccordé à une sortie (62a) d'une électrovanne (62) du système (60) de préparation d'air.

13. Dispositif (1) de frein de stationnement suivant la revendication 12, **caractérisé en ce qu'**il est conçu pour, pendant la fonction trailer-test de la pression s'appliquant dans le conduit (22") d'arrivée relié à la première entrée (54a) de la deuxième vanne (54) select-low et de la pression s'appliquant, par le conduit (64) d'arrivée venant du système de traitement d'air, commuter la deuxième vanne (54) select-low, de manière à ouvrir la première entrée (54a).

14. Dispositif (1) de frein de stationnement suivant l'une des revendications précédentes, **caractérisé en ce qu'**au moins une deuxième ligne (38') de commande du frein de service distinct est reliée au module de commande de remorque.
